# EUROPEAN PATENT SPECIFICATION

(11) **EP 4 146 600 B1**
(45) Date of publication and mention of the grant of the patent: **06.03.2024**
(21) Application number: 21727555.1
(22) Date of filing: 04.05.2021
(51) Int. Cl.: C02F 1/32, B65D 51/28, C02F 103/02

(54) **STERILIZATION COVER**
STERILISATIONSABDECKUNG
COUVERCLE DE STÉRILISATION

(30) Priority: 07.05.2020 IT 202000010180
(43) Date of publication of application: 15.03.2023
(73) Proprietor: Atomo S.r.l., 25080 Manerba del Garda (IT)
(72) Inventor: COPETA, Andrea, 25080 Manerba del Garda (IT)
(74) Representative: Modiano, Micaela Nadia
(86) International application number: PCT/IB2021/053704
(87) International publication number: WO 2021/224772

(56) References cited:
- WO-A1-2019/061835
- KR-A- 20190 000 517
- KR-B1- 102 097 168
- US-A1- 2020 079 658

## Description

The present invention relates to a sterilization cover.

Ultraviolet-ray sterilizers are known which have the function of sterilizing water, typically for drinking and technological use, by eliminating various types of microorganisms.

The disinfection of water is obtained by means of the action of an ultraviolet germicidal radiation (typically UV-C rays), with no dosing of chemical products such as for example chlorine-based disinfectants, thus leaving unchanged the organoleptic characteristics of the water.

The use of UV rays allows an effective disinfection and potabilization method that does not alter the odor, taste or pH of the treated water.

Generally, the choice of the sterilizer takes into account some sizing parameters, such as the maximum flow rate of the water to be sterilized, turbidity and problems highlighted by microbiological analysis (types of viruses and bacteria, spores, other pathogens potentially present).

The dimensions, the number of UV lamps and the electric power consumption of UV sterilizers vary as a function of the flow rate of water to be treated.

Small sterilizers for under-sink installations, systems for home and professional use, industrial water sterilizers for the disinfection of medium flow rates of water for civil and industrial use are known.

Solutions suitable for pathogen removal and sterilization of water contained in small containers, such as for example jugs or flasks, are also known.

In this respect, US 10,570,028 in the name of LARQ describes a jug or a flask having at the bottom an interspace designed to accommodate UV lamps, a control and actuation card and a power supply battery.

Solutions are also known which provide for incorporating the UV lamps inside the containers themselves, but it has been found that this leads to a certain number of problems in relation to both production and any maintenance of the products.

In fact, although an industrialization of the sterilization device aimed at incorporating it into the product itself on the one hand allows to optimize space and performance, on the other hand it determines an increase in production and maintenance costs, which are already quite high when one intends to use UV lamps that are extremely compact and powerful enough to ensure sterilization in reasonable times.

In this regard, KR102097168 B1 relates to a sterilization cover for containers, such as bottles, which incorporates (or which integrate) a respective sterilization device.

In this solution, however, the connection system between the cover, which is intended to be screwed onto the bottle, and the sterilization device is specifically designed.

In particular, with reference to KR102097168 B1, the connection is ensured by three fastening screws intended to pass through respective holes formed on a portion of the sterilization device in order to engage inside engagement cavities provided in specific portions supported directly by the cover.

WO2019/061835 describes and illustrates a sterilization device that can be associated with a metal sheet intended to be part of a tank.

However, in this case, the fastening of the sterilization device with respect to the metal sheet does not provide, by conformation, the possibility of removal.

The aim of the present invention is to provide a sterilization cover that is capable of improving the background art in one or more of the aspects mentioned above.

Within this aim, an object of the invention is to provide a sterilization cover, particularly for containers or for ducts, that allows to optimize production and maintenance costs.

Another object of the invention is to provide a sterilization cover capable of adapting, in an extremely effective manner, to the different types of containers or ducts.

Another object of the invention is to provide a sterilization cover which, because of its shape, allows to optimize the materials and the properties of the various components, without compromising its properties.

Not least object of the invention is to provide a sterilization cover that is highly reliable, relatively easy to provide and at competitive costs.

This aim and these and other objects which will become better apparent hereinafter are achieved by a sterilization cover according to claim 1, optionally provided with one or more of the characteristics of the dependent claims.

Further characteristics and advantages of the invention will become better apparent from the description of some preferred but not exclusive embodiments of the sterilization cover according to the invention, illustrated by way of non-limiting example in the accompanying drawings, wherein:
Figure 1 is a sectional view of a flask associated with a sterilization cover according to the invention;
Figure 2 is an enlarged-scale view of a portion of the sectional view of Figure 1;
Figure 3 is a perspective view, in which the flask has been cross-sectioned for the sake of clarity, of the portion of Figure 2;
Figure 4 is a sectional view of the flask;
Figure 5 is a view, similar to the preceding one, with the flask cross-sectioned for greater clarity of representation of the cover;
Figure 6 is a sectional view of a duct associated with a sterilization cover according to the invention.

With reference to the figures, the sterilization cover according to the invention, generally designated by the reference numeral 1, is of the type suitable to close a containment or crossing body 10 for a fluid to be sterilized 101.

Advantageously, the fluid to be sterilized 101 comprises water.

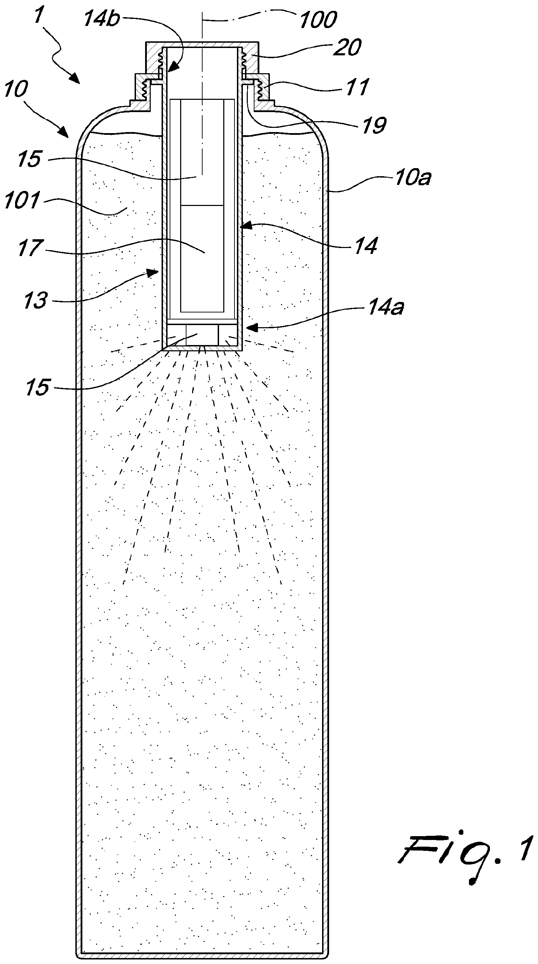

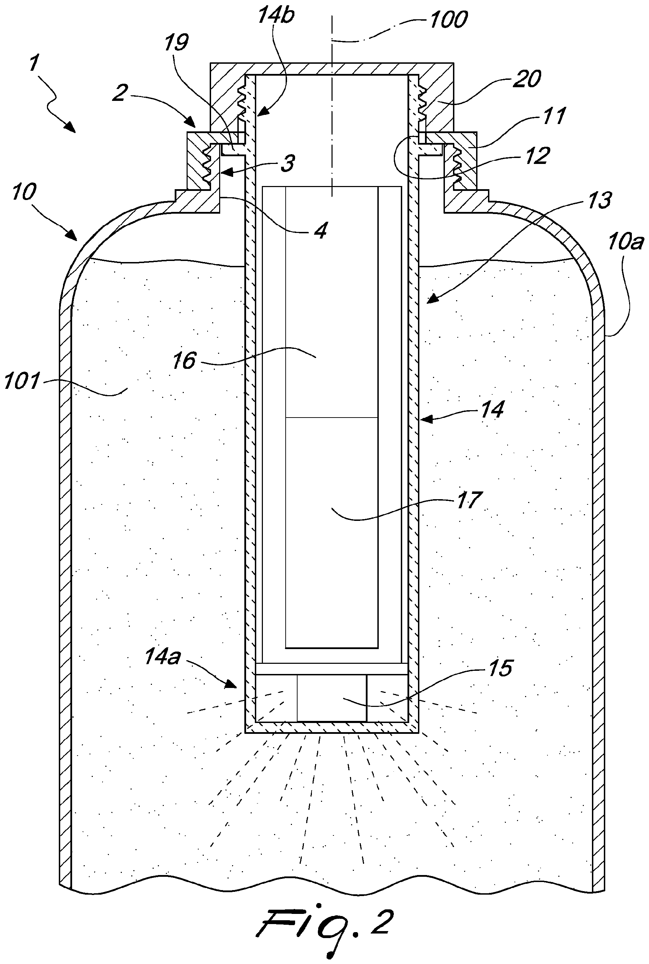

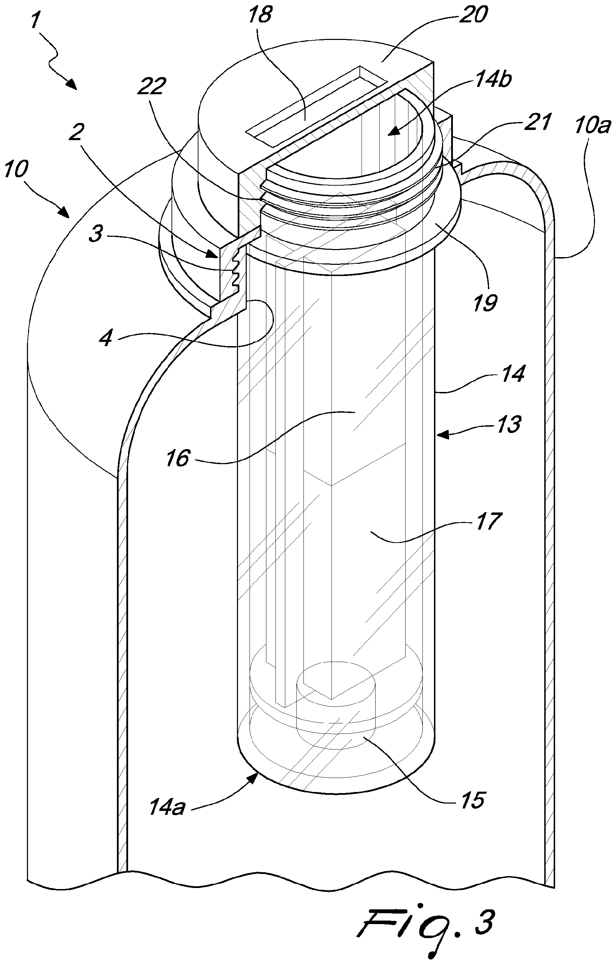

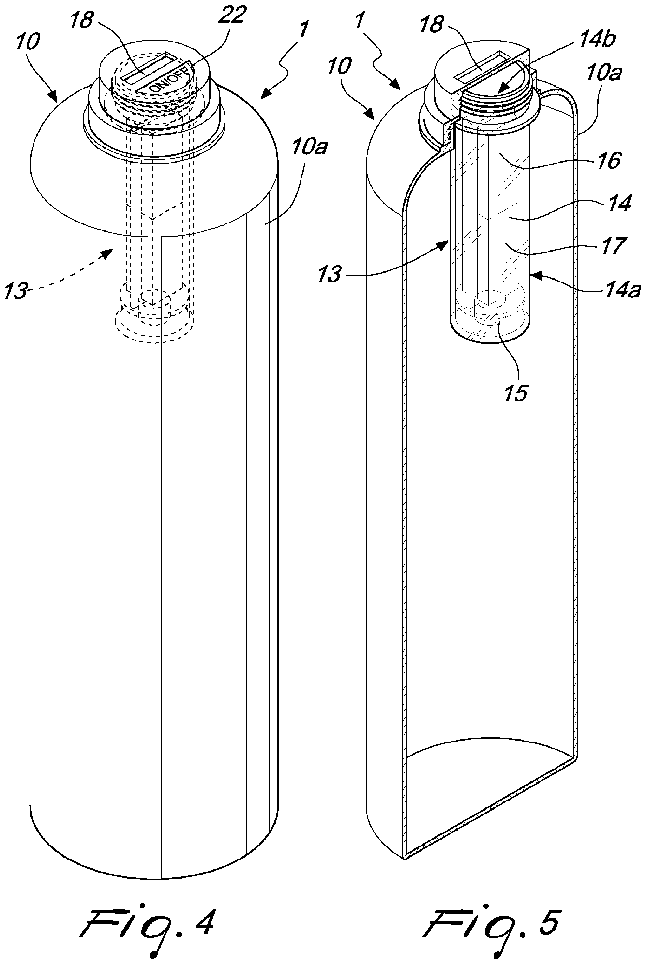

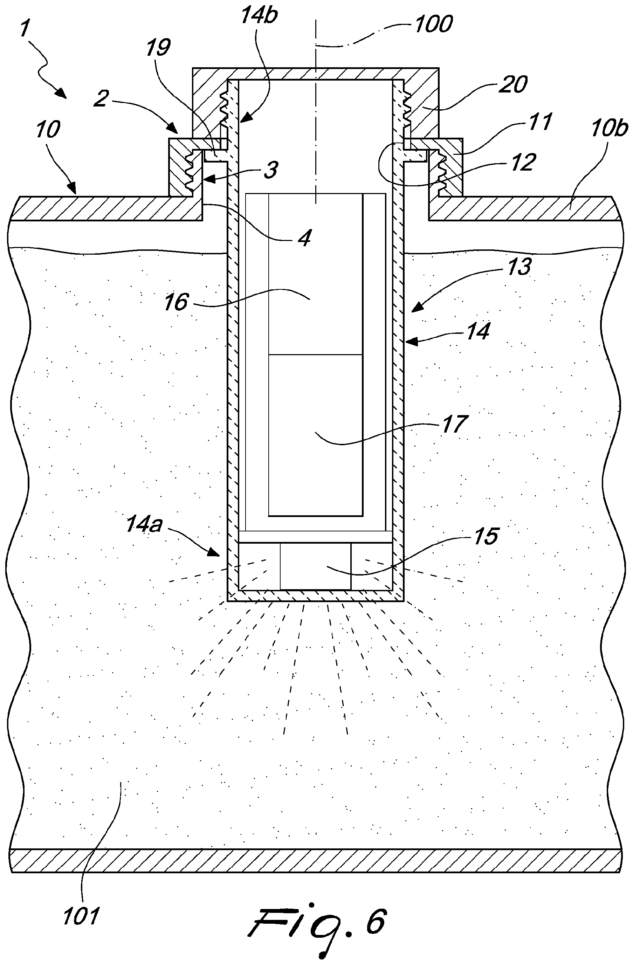

By way of example, the containment or crossing body 10 can comprise a flask or jug 10a (as shown in Figures 1 to 5), or a tank or duct 10b for conveying a fluid (as shown in Figure 6).

The sterilization cover 1 comprises first hermetic connection means 2, typically a screw-and-nut coupling, designed to engage with a coupling portion 3 formed on the containment or crossing body 1 and extended around an access mouth 4.

If the sterilization cover 1 is designed to be used for a flask 10a, the access mouth 4 is constituted by the filling and emptying mouth of said flask 10a.

According to the present invention, the sterilization cover 1 comprises a first element 11 of the cover 1 that forms the first hermetic connection means 2 and at least one crossing opening 12, and at least one second element 13 comprising an elongated containment body 14 that is extended along a longitudinal direction of extension 100.

The elongated containment body 14 is designed to be coupled stably and hermetically to the first element 11 so that the elongated containment body 14, during use, passes through the respective crossing opening 12.

Preferably, the elongated containment body is configured to be coupled in a detachable manner to the first element 11.

The elongated containment body 14 accommodates, at a first end portion 14a designed to be arranged inside the containment or crossing body 10, a device 15 for emitting rays of a frequency of light in the visible and/or non-visible spectrum, for example UV or IR.

The elongated containment body 14 furthermore accommodates a control and actuation card 16 and power supply means 17 for the ray emission device 15.

Preferably, the ray emission device 15 comprises one or more LED with a spectrum in the non-visible frequency, such as infrared (IR) and ultraviolet (UV), in particular UV-B and more preferably UV-C.

Naturally, it is possible to provide emission devices 15 with frequencies in the visible spectrum, as an addition or as a replacement.

Advantageously, the elongated containment body 14 is made, at least at the second end portion 14a, of a material that is transparent to UV rays.

In particular, the elongated containment body 14, at least at the first end portion 14a, may be made of fused quartz, fused silica, silicone or other materials which do not retain, or minimally retain, all the visible and infrared (IR) and ultraviolet (UV) spectrum.

The elongated containment body 14 has a second end portion 14b arranged, during use, on the opposite side of the crossing opening 12 with respect to the first end portion 14a.

Preferably, the The second end portion 14b comprises an actuation body 22, or button, which is functionally associated with the control and actuation card 16 for the activation of the emission device 15 on command.

The sterilization cover 1 comprises means for connection between the first element 11 and the second element 13.

Such connection means are adapted to allow the stable locking of the second element 13 on the first element 11.

In this regard, the elongated containment body 14 comprises an annular flange 19 and the first element 11 forms an annular abutment body that extends around the opening 12.

The connection means comprise means for the hermetic fastening of the annular flange 19 against the annular abutment body.

The hermetic fastening means comprise a bayonet coupling or a screw-and-nut coupling (as shown in the figures) between a fastening body 20 provided with a portion for engagement with the second element 13 and a portion for abutment with the first element 11 in order to allow mutual approach and spacing between the annular flange 19 and the annular abutment body.

Conveniently, hermetic means, such as for example a gasket, are present between the annular flange 19 and the annular hermetic body in order to ensure a hermetic coupling.

With reference to the embodiment shown in the figures, the fastening body 20 supports the actuation body 22 so that the latter can be actuated easily by the user.

In practice, in order to mutually fix stably the first element 11 and the second element 13, one proceeds to insert the second end portion 14b of the elongated containment body 14 inside the opening 12 so that the annular flange 19 abuts against the annular hermetic body.

The fastening body 20 is then screwed onto the thread formed at the second end portion 14b of the elongated containment body 14 so that its free edge can abut against the annular hermetic body on the surface that is opposite the one abutted against the annular flange 19.

In this manner, a fastening torque is applied which allows to stably and hermetically connect the second element 13 on the first element 11, providing a sterilization cover 1 that can then be associated with a containment or crossing body 10.

Preferably, the elongated containment body 14 is provided monolithically.

Conveniently, the elongated containment body 14 accommodates at least one power supply battery 17, preferably of the rechargeable type.

With reference to the practical embodiment shown in the figures, the elongated containment body 14 has, at the second end portion 14b, a socket device 18, which can be connected to charging means, for charging the power supply battery 17.

By way of example, the socket device 18 comprises a USB port or a similar terminal.

According to one possible constructive variation, the sterilization cover 1 comprises wireless or wired means for the remote control of the control and actuation card 16.

This last embodiment can be used for containers of large size, for example containment tanks, or in supply ducts 10b for water or fluids in general.

According to a further aspect, the present invention relates to a method for providing a sterilization cover 1 which comprises the following steps:
- providing a first element 11 which forms first hermetic connection means 2 designed to engage a coupling portion 3 formed on a containment or crossing body for a fluid to be sterilized and extended around an access mouth 4 of the containment or crossing body 10;
- providing, on the first element 11, a crossing opening 12;
- coupling stably and hermetically the first element 11 and a second element 13 which comprises an elongated containment body 14 extended along a longitudinal direction of extension 100 so that the elongated containment body 14 passes through the crossing opening 12, the elongated containment body 14 accommodating, at a first end portion 14a designed to be arranged inside the containment or crossing body 10, a device 15 for emitting rays of a frequency of light in the visible and/or non-visible spectrum, for example UV or IR, the elongated containment body 14 furthermore accommodating a control and actuation card 16 and power supply means 17 of said emission device 15.

Specifically, in order to fix stably and hermetically the first element 11 and the second element 13 one proceeds to insert the second end portion 14b of the elongated containment body 14 inside the opening 12 so that the annular flange 19 abuts against the annular hermetic body.

Then the fastening body 20 is coupled, by means of a bayonet coupling or a screw-and-nut coupling, to the second end portion 14b (for example on the thread formed at the elongated containment body 14) so that its free edge can abut against the annular abutment body on the surface that is opposite the one abutted against the annular flange 19.

In this manner, a fastening torque is applied which allows to stably and hermetically connect the second element 13 on the first element 11, providing a sterilization cover 1 that can be then associated with a containment or crossing body 10.

The use of the sterilization cover 1 according to the invention is the same as any cover for jugs, flasks, tanks, ducts, etcetera.

The provision of the sterilization cover 1 in two different elements that can be easily coupled stably allows to optimize the materials and dimensions of the two elements, i.e., of the first element 11 (which defines the means of coupling and uncoupling with the container) and of the second element 13 that supports the emission device 15.

In practice it has been found that the invention has achieved the intended aim and objects, providing a sterilization cover 1 that is extremely flexible in its production since it may allow the use of first elements 11 that correspond to standard covers (already industrialized), providing a simple modification thereof by providing a through opening in which the second element 13 constituted by the elongated containment body 14 is subsequently accommodated.

This allows to reduce in a very significant way the production costs, being able to use the same elongated containment body 14 on first elements 11 of different shape or size.

The invention thus conceived is susceptible of numerous modifications and variations, and is defined in the accompanying claims.

According to the present invention, the cover 1 can be used not only as a sterilizer but also as a scale remover device, capable of being inserted or integrated in all water systems such as for example boilers, systems for the management or supply of swimming pools/whirlpool baths, etcetera.

Naturally, it is possible to associate multiple devices with the device 1 in order to increase its action.

The cover 1 can, conveniently, be provided also with sensors which protect it against misuse by blocking operation under certain conditions, as well as with a system for storing usage data.

In practice, the materials used, so long as they are compatible with the specific use, as well as the contingent shapes and dimensions, may be any according to the requirements and the state of the art.

The disclosures in Italian Invention Patent Application No. 102020000010180, from which this application claims priority, are also cited here for reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A sterilization cover (1) for a containment or crossing body (10) for a fluid to be sterilized, comprising first hermetic connection means (2) designed to engage with a coupling portion (3) formed on said containment or crossing body (10) and extended around an access mouth (4) of the containment or crossing body (10), **characterized in that** said sterilization cover (1) comprises a first element (11) of the cover (1) which forms said first hermetic connection means (2) and at least one crossing opening (12), and at least one second element (13) which comprises an elongated containment body (14) that is extended along a longitudinal direction of extension (100) and is designed to be coupled stably and hermetically to said first element (11) so that said elongated containment body (14) passes through said at least one crossing opening (12), said elongated containment body (14) accommodating, at a first end portion (14a) designed to be arranged within said containment or crossing body (10), a device (15) for emitting rays of a frequency of light in the visible and/or non-visible spectrum, for example UV or IR, said elongated containment body (14) furthermore accommodating a control and actuation card (16) and power supply means (17) of said emission device (15), said elongated containment body (14) having a second end portion (14b) arranged on the opposite side of said crossing opening (12) with respect to said first end portion (14a), second connection means between said first element (11) and said second element (13) being provided and being adapted to allow the stable locking of said second element (13) on said first element (11), said elongated containment body (14) comprising an annular flange (19), said first element (11) forming an annular abutment body that is extended around said opening (12), said second connection means comprising means for the hermetic fastening of said annular flange (19) in abutment against said annular abutment body, said hermetic fastening means comprising a bayonet coupling or a screw-and-nut coupling between a fastening body (20) provided with a portion for engagement with said second element (13) and a free edge for abutment with said annular abutment body of said first element (11) on the surface that is opposite the one abutted against said annular flange (19) in order to allow mutual approach and spacing between said annular flange (19) and said annular abutment body.

2. The sterilization cover (1) according to claim 1, **characterized in that** said elongated containment body (14) is made, at least at said second end portion (14a), of a material that is transparent to UV rays.

3. The sterilization cover (1) according to one or more of the preceding claims, **characterized in that** said second end portion (14b) comprises an actuation body (22) which is functionally associated with said control and actuation card (16) for the activation on command of said emission device (15).

4. The sterilization cover (1) according to one or more of the preceding claims, **characterized in that** said elongated containment body (14) is provided monolithically.

5. The sterilization cover (1) according to one or more of the preceding claims, **characterized in that** said elongated containment body (14) accommodates at least one power supply battery (18).

6. The sterilization cover (1) according to one or more of the preceding claims, **characterized in that** said elongated containment body (14) has, at said second end portion (14b), a socket device, which can be connected to charging means, for charging said power supply battery (18).

7. The sterilization cover (1) according to claim 3, **characterized in that** it comprises wireless or wired means for the remote control of said control and actuation card (16).

8. A method for providing a sterilization cover (1), comprising the following steps:
- providing a first element (11) which forms first hermetic connection means (2) designed to engage a coupling portion (3) formed on a containment or crossing body (10) for a fluid to be sterilized (101) and extended around an access mouth (4) of the containment or crossing body (10);
- providing, on said first element (11), a crossing opening (12);
- coupling stably and hermetically said first element (11) and a second element (13) which comprises an elongated containment body (14) that is extended along a longitudinal direction of extension (100) so that said elongated containment body (14) passes through said crossing opening (12), said elongated containment body (14) accommodating, at a first end portion (14a) designed to be arranged inside said containment or crossing body (10), an emission device (15) for rays of a frequency of light in the visible and/or non-visible spectrum, for example UV or IR, said elongated containment body (14) furthermore accommodating a control and actuation card (16) and power supply means (17) of said emission device (15), said elongated containment body (14) comprising an annular flange (19) and said first element (11) forming an annular abutment body that is extended around said opening (12),
- the stable coupling between said first element (11) and said second element (13) comprising a step of insertion of a second end portion (14b) that is opposite said first end portion (14a) of the elongated containment body (14) inside said opening (12) so that said annular flange (19) abuts against said annular abutment body;
- a step for coupling a fastening body (20), by means of a bayonet coupling or a screw-and-nut coupling, to said second end portion (14b) so that its free edge can abut against said annular abutment body on the surface that is opposite the one abutted against said annular flange (19) so as to connect stably and hermetically said second element (13) on said first element (11), providing said sterilization cover (1) which is then associable with a containment or crossing body (10).

## Patentansprüche

1. Eine Sterilisationsabdeckung (1) für einen Aufnahme- oder Durchleitungskörper (10) für eine zu sterilisierende Flüssigkeit, erste hermetische Anschlussmittel (2) umfassend, die dazu bestimmt sind, mit einem Kopplungsabschnitt (3) in Eingriff zu stehen, der an dem Aufnahme- oder Durchleitungskörper (10) geformt ist und sich um eine Zugangsöffnung (4) des Aufnahme- oder Durchleitungskörpers erstreckt; **dadurch gekennzeichnet, dass** die Sterilisationsabdeckung (1) ein erstes Element (11) der Abdeckung (1) umfasst, das die ersten hermetischen Anschlussmittel (2) und mindestens eine Durchleitungsöffnung (12) bildet; und mindestens ein zweites Element (13), das einen lang gestreckten Aufnahmekörper (14) umfasst, welcher sich entlang einer Längsrichtung der Erstreckung (100) erstreckt und konstruiert ist, um fest und hermetisch mit dem ersten Element (11) gekoppelt zu werden, so dass der lang gestreckte Aufnahmekörper (14) durch die mindestens eine Durchleitungsöffnung (12) verläuft; wobei der lang gestreckte Aufnahmekörper (14) an einem ersten Endabschnitt (14a), der dazu bestimmt ist, in den Aufnahme- oder Durchleitungskörper (10) aufgenommen zu werden, eine Vorrichtung (15) zur Emission von Strahlen mit einer Lichtfrequenz im sichtbaren und/oder im nicht sichtbaren Spektrum, zum Beispiel UV oder IR, enthält; wobei der lang gestreckte Aufnahmekörper (14) weiter eine Steuerungs- und Schaltkarte (16) und Stromversorgungsmittel (17) der Emissionsvorrichtung (15) enthält; wobei der lang gestreckte Aufnahmekörper (14) einen zweiten Endabschnitt (14b) hat, welcher auf der Seite der Durchleitungsöffnung (12) angeordnet ist, die dem ersten Endabschnitt (14a) gegenüberliegt; wobei zweite Anschlussmittel zwischen dem ersten Element (11) und dem zweiten Element (13) angeordnet und ausgebildet sind, um die stabile Befestigung des zweiten Elements (13) an dem ersten Element (11) zu ermöglichen; wobei der lang gestreckte Aufnahmekörper (14) einen Ringflansch (19) umfasst; wobei das erste Element (11) einen ringförmigen Widerlagerkörper bildet, der sich um die Öffnung (12) herum erstreckt; wobei die zweiten Anschlussmittel Mittel zur hermetischen Befestigung des Ringflansches (19) im Anschlag an den ringförmigen Widerlagerkörper umfassen; wobei die hermetischen Befestigungsmittel Folgendes umfassen: eine Bajonettkupplung oder eine Schraubenkupplung zwischen einem Befestigungskörper (20), ausgestattet mit einem Abschnitt für den Eingriff mit dem zweiten Element (13) und einer freien Kante zum Anliegen an dem ringförmigen Widerlagerkörper des ersten Elements (11) an der Fläche, die derjenigen gegenüberliegt, welche an dem Ringflansch (19) anliegt, um das gegenseitige Annähern und Entfernen zwischen dem Ringflansch (19) und dem ringförmigen Widerlagerkörper zu gestatten.

2. Die Sterilisationsabdeckung (1) gemäß Anspruch 1, **dadurch gekennzeichnet, dass** der lang gestreckte Aufnahmekörper (14) zumindest an dem zweiten Endabschnitt (14a) aus einem Material besteht, welches durchlässig für UV-Strahlen ist.

3. Die Sterilisationsabdeckung (1) gemäß einem oder mehreren der obigen Ansprüche, **dadurch gekennzeichnet, dass** der zweite Endabschnitt (14b) einen Schaltkörper (22) umfasst, welcher zur Aktivierung der Emissionsvorrichtung (15) auf Befehl funktionell mit der Steuerungs- und Schaltkarte (16) verknüpft ist.

4. Die Sterilisationsabdeckung (1) gemäß einem oder mehreren der obigen Ansprüche, **dadurch gekennzeichnet, dass** der lang gestreckte Aufnahmekörper (14) monolithisch hergestellt ist.

5. Die Sterilisationsabdeckung (1) gemäß einem oder mehreren der obigen Ansprüche, **dadurch gekennzeichnet, dass** der lang gestreckte Aufnahmekörper (14) mindestens eine Stromversorgungsbatterie (18) enthält.

6. Die Sterilisationsabdeckung (1) gemäß einem oder mehreren der obigen Ansprüche, **dadurch gekennzeichnet, dass** der lang gestreckte Aufnahmekörper (14) an dem zweiten Endabschnitt (14b) eine Buchsenvorrichtung hat, die zum Laden der Stromversorgungsbatterie (18) mit Lademitteln verbunden werden kann.

7. Die Sterilisationsabdeckung (1) gemäß Anspruch 3, **dadurch gekennzeichnet, dass** sie drahtlose oder verdrahtete Mittel für die Fernsteuerung der Steuerungs- und Schaltkarte (16) umfasst.

8. Ein Verfahren zur Bereitstellung einer Sterilisationsabdeckung (1), das folgende Schritte umfasst:
- das Bereitstellen eines ersten Elements (11), welches erste hermetische Anschlussmittel (2) bildet, die dazu bestimmt sind, mit einem Kopplungsabschnitt (3) in Eingriff zu stehen, der an einem Aufnahme- oder Durchleitungskörper (10) für eine zu sterilisierende Flüssigkeit (101) geformt ist und sich um eine Zugangsöffnung (4) des Aufnahme- oder Durchleitungskörpers (10) herum erstreckt;
- das Bereitstellen einer Durchleitungsöffnung (12) an dem ersten Element (11);
- das feste und hermetische Koppeln des ersten Elements (11) und eines zweiten Elements (13), welches einen lang gestreckten Behälterkörper (14) umfasst, der sich in einer Längsrichtung der Erstreckung (100) erstreckt, so dass der lang gestreckte Behälterkörper (14) durch die Durchleitungsöffnung (12) dringt, wobei der lang gestreckte Aufnahmekörper (14) an einem ersten Endabschnitt (14a), der dazu bestimmt ist, in den Aufnahme- oder Durchleitungskörper (10) aufgenommen zu werden, eine Vorrichtung (15) zur Emission von Strahlen mit einer Lichtfrequenz im sichtbaren und/oder im nicht sichtbaren Spektrum, zum Beispiel UV oder IR, enthält; wobei der lang gestreckte Aufnahmekörper (14) weiter eine Steuerungs- und Schaltkarte (16) und Stromversorgungsmittel (17) der Emissionsvorrichtung (15) enthält; wobei der lang gestreckte Aufnahmekörper (14) einen Ringflansch (19) umfasst und das erste Element (11) einen ringförmigen Widerlagerkörper bildet, der sich um die Öffnung (12) herum erstreckt;
- wobei die feste Kopplung zwischen dem ersten Element (11) und dem zweiten Element (13) einen Schritt des Einsetzens eines zweiten Endabschnitts (14b), der dem ersten Endabschnitt (14a) des lang gestreckten Behälterkörpers (14) gegenüberliegt, in die Öffnung (12) umfasst, so dass der Ringflansch (19) an dem ringförmigen Widerlagerkörper anliegt;
- einen Schritt zur Kopplung eines Befestigungskörpers (20), durch eine Bajonettkupplung oder eine Schraubenkupplung, mit dem zweiten Endabschnitt (14b), so dass sein freies Ende an dem ringförmigen Widerlagerkörper an der Fläche anliegen kann, die derjenigen gegenüberliegt, welche an dem Ringflansch (19) anliegt, um das zweite Element (13) fest und hermetisch mit dem ersten Element (11) zu verbinden und so die Sterilisationsabdeckung (1) herzustellen, die dann mit einem Aufnahme- oder Durchleitungskörper (10) verbunden werden kann.

## Revendications

1. Couvercle de stérilisation (1) pour un corps de confinement ou de passage (10) pour un fluide devant être stérilisé, comprenant des premiers moyens de liaison hermétique (2) conçus pour se mettre en prise avec une partie de couplage (3) formée sur ledit corps de confinement ou de passage (10) et s'étendant autour d'une bouche d'accès (4) du corps de confinement ou de passage (10), **caractérisé en ce que** ledit couvercle de stérilisation (1) comprend un premier élément (11) du couvercle (1) qui forme lesdits premiers moyens de liaison hermétique (2) et au moins une ouverture de passage (12), et au moins un deuxième élément (13) qui comprend un corps de confinement allongé (14) qui s'étend le long d'une direction longitudinale d'extension (100) et est conçu pour être couplé de manière stable et hermétique audit premier élément (11) de sorte que ledit corps de confinement allongé (14) traverse ladite au moins une ouverture de passage (12), ledit corps de confinement allongé (14) accueillant, au niveau d'une première partie d'extrémité (14a) conçue pour être agencée au sein dudit corps de confinement ou de passage (10), un dispositif (15) pour l'émission de rayons d'une fréquence de lumière dans le spectre visible et/ou non visible, par exemple UV ou IR, ledit corps de confinement allongé (14) accueillant en outre une carte de contrôle et d'actionnement (16) et des moyens d'alimentation électrique (17) dudit dispositif d'émission (15), le corps de confinement allongé (14) ayant une deuxième partie d'extrémité (14b) agencée sur le côté opposé de ladite ouverture de passage (12) par rapport à ladite première partie d'extrémité (14a), des deuxièmes moyens de liaison entre ledit premier élément (11) et ledit deuxième élément (13) étant prévus et étant adaptés pour permettre le verrouillage stable dudit deuxième élément (13) sur ledit premier élément (11), ledit corps de confinement allongé (14) comprenant une bride annulaire (19), ledit premier élément (11) formant un corps de butée annulaire qui s'étend autour de ladite ouverture (12), lesdits moyens de liaison comprenant des moyens pour la fixation hermétique de ladite bride annulaire (19) en butée contre ledit corps de butée annulaire, lesdits moyens de fixation hermétique comprenant un couplage à baïonnette ou un couplage par vis et écrou entre un corps de fixation (20) muni d'une partie pour une mise en prise avec ledit deuxième élément (13) et un bord libre pour une mise en butée avec ledit corps de butée annulaire dudit premier élément (11) sur la surface qui est opposée à celle en butée contre ladite bride annulaire (19) afin de permettre un rapprochement et un espacement mutuels entre ladite bride annulaire (19) et ledit corps de butée annulaire.

2. Couvercle de stérilisation (1) selon la revendication 1, **caractérisé en ce que** ledit corps de confinement allongé (14) est constitué, au moins au niveau de ladite deuxième partie d'extrémité (14a), d'un matériau qui est transparent aux rayons UV.

3. Couvercle de stérilisation (1) selon l'une ou plusieurs des revendications précédentes, **caractérisé en ce que** ladite deuxième partie d'extrémité (14b) comprend un corps d'actionnement (22) qui est fonctionnellement associé à ladite carte de contrôle et d'actionnement (16) pour l'activation sur commande dudit dispositif d'émission (15).

4. Couvercle de stérilisation (1) selon l'une ou plusieurs des revendications précédentes, **caractérisé en ce que** ledit corps de confinement allongé (14) est prévu de manière monolithique.

5. Couvercle de stérilisation (1) selon l'une ou plusieurs des revendications précédentes, **caractérisé en ce que** ledit corps de confinement allongé (14) accueille au moins une batterie d'alimentation électrique (18).

6. Couvercle de stérilisation (1) selon l'une ou plusieurs des revendications précédentes, **caractérisé en ce que** ledit corps de confinement allongé (14) possède, au niveau de ladite deuxième partie d'extrémité (14b), un dispositif formant douille, qui peut être relié à des moyens de recharge, pour la recharge de ladite batterie d'alimentation électrique (18).

7. Couvercle de stérilisation (1) selon la revendication 3, **caractérisé en ce qu'**il comprend des moyens sans fil ou filaires pour le contrôle à distance de ladite carte de contrôle et d'actionnement (16).

8. Procédé pour la fourniture d'un couvercle de stérilisation (1), comprenant les étapes suivantes :
- la fourniture d'un premier élément (11) qui forme des premiers moyens de liaison hermétique (2) conçus pour se mettre en prise avec une partie de couplage (3) formée sur un corps de confinement ou de passage (10) pour un fluide devant être stérilisé (101) et s'étendant autour d'une bouche d'accès (4) du corps de confinement ou de passage (10) ;
- la fourniture, sur ledit premier élément (11), d'une ouverture de passage (12) ;
- le couplage, de manière stable et hermétique, dudit premier élément (11) et d'un deuxième élément (13) qui comprend un corps de confinement allongé (14) qui s'étend le long d'une direction longitudinale d'extension (100) de sorte que ledit corps de confinement allongé (14) traverse ladite ouverture de passage (12), ledit corps de confinement allongé (14) accueillant, au niveau d'une première partie d'extrémité (14a) conçue pour être agencée à l'intérieur dudit corps de confinement ou de passage (10), un dispositif d'émission (15) pour des rayons d'une fréquence de lumière dans le spectre visible et/ou non visible, par exemple UV ou IR, ledit corps de confinement allongé (14) accueillant en outre une carte de contrôle et d'actionnement (16) et des moyens d'alimentation électrique (17) dudit dispositif d'émission (15), ledit corps de confinement allongé (14) comprenant une bride annulaire (19) et ledit premier élément (11) formant un corps de butée annulaire qui s'étend autour de ladite ouverture (12),
- le couplage stable entre ledit premier élément (11) et ledit deuxième élément (13) comprenant une étape consistant à insérer une deuxième partie d'extrémité (14b) qui est opposée à ladite première partie d'extrémité (14a) du corps de confinement allongé (14) à l'intérieur de ladite ouverture (12) de sorte que ladite bride annulaire (19) soit en butée contre ledit corps de butée annulaire ;
- une étape pour le couplage d'un corps de fixation (20), au moyen d'un couplage à baïonnette ou d'un couplage par vis et écrou, à ladite deuxième partie d'extrémité (14b) de sorte que son bord libre puisse être mis en butée contre ledit corps de butée annulaire sur la surface qui est opposée à celle en butée contre ladite bride annulaire (19) de façon à relier de manière stable et hermétique ledit deuxième élément (13) sur ledit premier élément (11), en fournissant ledit couvercle de stérilisation (1) qui est ensuite apte à être associé à un corps de confinement ou de passage (10).
